# EUROPÄISCHE PATENTSCHRIFT

(11) **EP 3 049 275 B1**
(45) Veröffentlichungstag und Bekanntmachung des Hinweises auf die Patenterteilung: **23.06.2021**
(21) Anmeldenummer: 14758319.9
(22) Anmeldetag: 22.08.2014
(51) Int. Cl.: G01C 21/26, G01C 21/36, B60K 37/00, B60K 35/00, B60L 53/00, B60L 53/60, B60L 53/68, B60L 58/12, B60W 20/11, B60W 20/20, B60W 50/00, B60W 50/14, G01C 21/34

(54) **VERFAHREN UND VORRICHTUNG ZUR LADEPLANUNG EINES FAHRZEUGS MIT ELEKTRISCHEM ANTRIEB**
METHOD AND APPARATUS FOR CHARGE PLANNING OF AN ELECTRICALLY DRIVEN VEHICLE
PROCÉDÉ ET DISPOSITIF DE STRATÉGIE DE CHARGE AVEC ENTRAÎNEMENT ÉLECTRIQUE

(30) Priorität: 26.09.2013 DE 102013219441
(43) Veröffentlichungstag der Anmeldung: 03.08.2016
(73) Patentinhaber: Volkswagen Aktiengesellschaft, 38440 Wolfsburg (DE)
(72) Erfinder: BELLIN, Jan, 30627 Hannover (DE); BREUEL, Matthias, 68163 Mannheim (DE); WEISS, Norbert, 38173 Sickte (DE)
(86) Internationale Anmeldenummer: PCT/EP2014/067908
(87) Internationale Veröffentlichungsnummer: WO 2015/043849

(56) Entgegenhaltungen:
- DE-A1-102009 039 092
- DE-A1-102010 051 469
- US-A1- 2011 276 206
- US-A1- 2012 158 227
- US-A1- 2012 316 714

## Beschreibung

Die Erfindung betrifft ein Verfahren und eine Vorrichtung zur Ladeplanung eines Fahrzeugs mit elektrischem Antrieb.

Der Einsatz von Fahrzeugen mit elektrischem Antrieb nimmt stetig zu. Dabei sind die verschiedensten Ausgestaltungen bekannt, wie beispielsweise reine Elektrofahrzeuge oder Hybridfahrzeuge mit Plug-in.

Aus der DE 10 2010 039 075 A1 ist ein gattungsgemäßes Verfahren bekannt, bei dem dem Nutzer potentielle Ladesäulen angezeigt werden, wenn die verbleibende elektrische Energiemenge zu gering ist, um ein Fahrtziel zu erreichen. Dabei kann der Nutzer bestimmte Prioritäten vorgeben, nach denen die Ladesäulen sortiert werden. Dabei erhält eine Auswerteeinheit Informationen über die Verfügbarkeit der Ladesäulen, also mit was für einer Wartezeit zu rechnen ist.

Aus der US 2010/0006359 A1 ist ein Verfahren und eine Vorrichtung zur Ladeplanung eines Hybridfahrzeugs bekannt, wobei mit Hilfe einer Navigationsvorrichtung die Entfernung zu einer Ladesäule bestimmt wird. Die Ladesäule ist dabei vorzugsweise der heimatliche Abstellplatz. Der Fahrer wird dann von der Vorrichtung gefragt, ob dieser plant, das Fahrzeug elektrisch aufzuladen. Wird diese Frage bejaht, so wird abgefragt, welche Ladezeit der Nutzer plant. Hierzu erhält der Nutzer vorformulierte Ladezeiten zur Auswahl. In Abhängigkeit von der gewählten Ladezeit ändert dann das Fahrzeug die Betriebsstrategie. Wird beispielsweise eine ausreichend lange Ladezeit gewählt (z.B. 2 Stunden), so wird verstärkt elektrisch gefahren und der SOC (state of Charge) bis zum Erreichen der Ladesäule entsprechend erniedrigt. Ist hingegen die gewählte Ladezeit Null oder relativ kurz (z.B. ½ Stunde), so wird die Betriebsstrategie derart gewählt, dass der SOC entsprechend hoch bleibt, d.h. es wird auch mit der Brennkraftmaschine gefahren. Allerdings läuft dieses Verfahren nur im Hintergrund, d.h. der Nutzer erhält keinerlei Rückmeldung als Reaktion auf seine Auswahl.

Aus der US 2012/0098676 A1 ist ein Verfahren und eine Vorrichtung für ein Elektrofahrzeug bekannt, wo in Abhängigkeit von einem Ladezustand eines elektrischen Energiespeichers Ladesäulen angezeigt werden, die mit der noch vorhandenen elektrischen Energiemenge erreichbar sind.

Aus der DE 10 2010 010 445 A1 ist eine Anzeigevorrichtung eines Hybridfahrzeugs bekannt, die gesteuert über eine Navigationsvorrichtung eine zu einer aktuellen Fahrzeugposition korrespondierende Landkarte anzeigt, wobei abhängig von der zur Verfügung stehenden Kraftstoffmenge und abhängig von der zur Verfügung stehenden elektrischen Energie in die Landkarte mindestens zwei Bereiche einblendbar sind, nämlich ein erster Bereich, der unter Ausnutzung der zur Verfügung stehenden elektrischen Energie bei rein elektromotorischer Fahrt erreichbar ist, und ein zweiter Bereich, der zusätzlich unter Ausnutzung der zur Verfügung stehenden Kraftstoffmenge bei rein verbrennungsmotorischer und/oder kombinierter elektro- und verbrennungsmotorischer Fahrt erreichbar ist.

Aus der DE 10 2010 051 469 A1 ist ein Verfahren zur Ladeplanung eines Fahrzeugs mit elektrischem Antrieb bekannt, mittels einer Auswerteeinrichtung und einer Anzeige- und Bedieneinrichtung, wobei mittels der Auswerteeinrichtung mindestens eine elektrische Ladesäule im Umkreis des Fahrzeugs ermittelt wird und auf der Anzeige- und Bedieneinrichtung dargestellt wird.

Aus der US 2011/276206 A1 ist ein Serien-Hybridfahrzeug bekannt, wobei der Antrieb ausschließlich über eine Elektromaschine erfolgt, wobei eine Traktionsbatterie durch eine interne Einheit bestehend aus Brennkraftmaschine, Generator und Wechselrichter geladen wird. Derartige Fahrzeuge werden ausschließlich mit Kraftstoff für die Brennkraftmaschine betankt. Die interne Einheit kann mindestens in zwei Betriebsmodi betrieben werden, wobei in dem einen Modus die Batterie schneller geladen wird, aber auch mehr Kraftstoff verbraucht wird. Es wird dann dargestellt, ob im langsamen Lademodus ein Ziel in einer gewünschten Zeit erreicht werden kann. Ist dies nicht der Fall, kann durch Umstellung auf das schnellere Laden die Lademenge in der Batterie erhöht werden, wobei dazu dargestellt wird, ob der vorhandene Kraftstoff reicht.

Aus der US 2012/158227 A1 ist ein Verfahren bekannt, wobei Ladesäulen im Umkreis eines Kraftfahrzeugs dargestellt werden, wobei eine Region um das Kraftfahrzeug dargestellt wird, bis an dessen Grenze das Fahrzeug rein elektrisch fahren kann, wobei bei Auswahl einer Ladesäule außerhalb der Region eine Hilfsenergiequelle zugeschaltet wird.

Der Erfindung liegt das technische Problem zugrunde, ein Verfahren zur Ladeplanung eines Fahrzeugs mit elektrischem Antrieb zur Verfügung zu stellen, sowie eine solche Vorrichtung zu schaffen, mittels derer der Nutzer bei der Planung besser unterstützt wird.

Die Lösung des technischen Problems ergibt sich durch das Verfahren mit den Merkmalen des Anspruchs 1 sowie eine Vorrichtung mit den Merkmalen des Anspruchs 9. Weitere vorteilhafte Ausgestaltungen der Erfindung ergeben sich aus den Unteransprüchen.

Das Verfahren zur Ladeplanung eines Fahrzeugs mit elektrischem Antrieb erfolgt mittels einer Auswerteeinrichtung und einer Anzeige- und Bedieneinrichtung, wobei mittels der Auswerteeinrichtung mindestens eine elektrische Ladesäule im Umkreis des Fahrzeugs ermittelt wird und auf der Anzeige- und Bedieneinrichtung dargestellt wird. Die Auswerteeinrichtung greift hierzu auf eine geeignete Datenbasis zu, die beispielsweise Bestandteil einer digitalen Straßenkarte ist. Die Datenbasis kann aber auch extern sein, wobei über eine geeignete Kommunikationsverbindung auf diese externe Datenbasis zugegriffen werden kann. Dabei sei angemerkt, dass die Ladeplanung sowohl vor als auch während der Fahrt erfolgen kann. Weiter werden vorzugsweise mindestens zwei oder mehr elektrische Ladesäulen dargestellt, sodass der Nutzer entsprechend größere Freiheitsgrade bei der Ladeplanung hat. Schließlich sei noch angemerkt, dass unter dem Begriff Ladesäule allgemein eine geeignete Vorrichtung zum elektrischen Laden eines elektrischen Energiespeichers des Fahrzeugs ist.

Auf der Anzeige- und Bedieneinrichtung wird eine aktuelle Betriebsstrategie dargestellt. Dabei ist die Betriebsstrategie bei einem Hybridfahrzeug mit Plug-in eine Unterteilung in elektromotorischen Betrieb und verbrennungsmotorischen Betrieb. Bei einem reinen Elektrofahrzeug ist die Betriebsstrategieeine Darstellung, bei welcher Verbraucher ein- oder ausgeschaltet werden müssen, um das Ziel zu erreichen.

Bei Auswahl einer elektrischen Ladesäule auf der Anzeige- und Bedieneinrichtung wird eine Ladezeit abgefragt. Die Auswerteeinrichtung ermittelt in Abhängigkeit der eingegebenen Ladezeit eine zukünftige Betriebsstrategie, die auf der Anzeige- und Bedieneinrichtung dargestellt wird. Somit erhält der Nutzer unmittelbar eine Rückmeldung, wie sich die gewählte Ladezeit an der ausgewählten Ladesäule auf die Betriebsstrategie auswirkt. Gibt beispielsweise der Nutzer bei einem Hybridfahrzeug mit Plug-in eine erste Ladezeit ein, sieht dieser sofort, wie sich die gewählte Ladezeit auf eine verlängerte rein elektrische Fahrt auswirkt. Ergibt dabei die zukünftige Betriebsstrategie beispielsweise, dass die gewählte Ladezeit nicht ausreicht, um ein gewünschtes Ziel rein elektrisch zu erreichen, so kann dieser gegebenenfalls die Ladezeit entsprechend verlängern und/oder eine zusätzliche und/oder eine andere Ladesäule wählen. Durch diese unmittelbare Rückwirkung kann der Nutzer sehr einfach eine Ladeplanung durchführen, um möglichst kraftstoffsparend zu fahren und das elektrische Potential voll auszunutzen. Alternativ kann anstelle der Ladezeit auch ein SOC-Wert (State of Charge) oder eine gewünschte Reichweite abgefragt werden. Dabei kann vorgesehen sein, dass der Nutzer über eine Einstellung auswählen kann, ob dieser nach einer Ladezeit, einer Lademenge (z.B. Lademenge in % oder einer Reichweite (Lademenge in km) abgefragt wird. Gegebenenfalls notwendige Umrechungen der einzelnen Größen Ladezeit, Lademenge und Reichweite erfolgen vorzugsweise in der Auswerteeinrichtung. Im einfachsten Fall wird einem Ladezeitintervall eine Lademenge SOC und eine damit verbundene Reichweite zugeordnet.

Vorzugsweise führt die Auswerteeinrichtung eine Vorauswahl möglicher Ladezeiten, Lademengen oder Reichweiten durch, die dann als Eingabeoption auf der Anzeige- und Bedieneinrichtung dargestellt werden. So kann beispielsweise die Auswerteeinrichtung eine Mindest-Ladezeit bestimmen, ab der ein elektrischer Ladevorgang sinnvoll ist. Die vorgegebenen Ladezeiten können dabei diskrete Werte wie beispielsweise 1/2 , 1 oder 2 Stunden sein. Entsprechend können diskrete Werte für die Lademengen wie beispielsweise 10%, 20% oder 30% bzw. Reichweiten wie beispielsweise 100, 200 und 300 km vorgegeben werden.

In einer alternativen Ausführungsform erfolgt mittels eines Eingabeelements eine kontinuierliche Ladezeit- oder Lademengen- oder Reichweiten-Eingabe. So kann beispielsweise das Eingabeelement als Schieber oder als Drehknopf ausgebildet sein. Der Nutzer kann dann kontinuierlich die Ladezeiten, Lademengen oder Reichweiten durchfahren und sofort unmittelbar die Änderung der Betriebsstrategie erkennen. Dabei sei angemerkt, dass das Eingabe-element nicht als mechanisches Element ausgebildet sein muss. Vorzugsweise ist die Anzeige- und Bedieneinrichtung als Touch-Screen bzw. als annäherungsempfindliche Anzeige- und Bedieneinrichtung ausgebildet, sodass das Eingabeelement entsprechend als Software-Eingabeelement ausgebildet ist.

Alternativ kann auch vorgesehen sein, dass das Eingabeelement eine gestufte Eingabe der Ladezeit, Lademengen oder Reichweite ermöglicht, sodass beispielsweise die Ladezeit in Schritten von beispielsweise 5- oder 15-Minuten-Schritten erhöht oder erniedrigt werden kann.

In einer weiteren Ausführungsform wird die in Abhängigkeit der gewählten Ladesäule und Ladezeit (oder Lademenge oder Reichweite) ermittelte zukünftige Betriebsstrategie an eine Steuereinheit einer Elektromaschine übermittelt. So kann beispielsweise bei einem Hybridfahrzeug mit Plug-in vorgesehen sein, den SOC bis zum Erreiche der Ladesäule stärker abzusenken und länger elektrisch zu fahren, als dies die bisherige Betriebsstrategie vorgegeben hat. Dabei kann vorgesehen sein, dass der Nutzer zuvor die gewählte Ladesäule und Ladezeit (Lademenge oder Reichweite) noch einmal ausdrücklich bestätigen muss, bevor die zukünftige Betriebsstrategie umgesetzt wird.

In einer weiteren Ausführungsform nimmt die Auswerteeinrichtung eine Vorauswahl der darzustellenden Ladesäulen vor, wobei die Vorauswahl mindestens in Abhängigkeit eines Ladezustandes eines elektrischen Energiespeichers der Elektromaschine und/oder einer Wartezeit an der Ladesäule erfolgt. Ist beispielsweise der SOC des Energiespeichers noch sehr hoch, so ist ein Ladevorgang normalerweise nicht sinnvoll, sodass Ladesäulen in kurzer Entfernung zum Fahrzeug nicht angezeigt werden müssen. Über eine Kommunikationsverbindung können dem Fahrzeug Wartezeiten für die Ladesäulen übermittelt werden, sodass Ladesäulen mit sehr langen Wartezeiten ebenfalls nicht dargestellt werden müssen. Ist eine Navigationseinrichtung aktiv, so werden vorzugsweise nur Ladesäulen dargestellt, die auf oder in der Nähe der ermittelten Route zum Fahrtziel sich befinden.

In einer weiteren Ausführungsform wird mittels einer Navigationseinrichtung ein Fahrtziel ermittelt, wobei die dargestellte Betriebsstrategie auf der Anzeige- und Bedieneinrichtung in Relation zum Fahrtziel dargestellt wird. Somit erhält der Nutzer einen guten Überblick, wie sich die geänderte Betriebsstrategie in Relation zum Fahrtziel auswirkt, beispielsweise ob das Fahrtziel rein elektrisch erreichbar ist.

In einer weiteren Ausführungsform wird ein aktueller Ladezustand des elektrischen Energiespeichers der Elektromaschine und/oder ein zeitlicher Verlauf eines Ladezustandes des elektrischen Energiespeichers der Elektromaschine und/oder eine geschätzte elektrische Restreichweite eRRW auf der Anzeige- und Bedieneinrichtung dargestellt.

In einer weiteren Ausführungsform wird nach Auswahl einer Ladesäule automatisch oder manuell auf der Anzeige- und Bedieneinrichtung eine Navigationsdarstellung zur Ladesäule dargestellt, sodass sich der Nutzer entsprechend orientieren kann.

Die Vorrichtung zur Ladeplanung eines Fahrzeugs mit elektrischem Antrieb umfasst eine Auswerteeinrichtung und eine Anzeige- und Bedieneinrichtung, wobei die Auswerteeinrichtung derart ausgebildet ist, dass mittels der Auswerteeinrichtung mindestens eine elektrische Ladesäule im Umkreis des Fahrzeugs ermittelt wird und auf der Anzeige- und Bedieneinrichtung derart ausgebildet sind, dass auf der Anzeige- und Bedieneinrichtung eine aktuelle Betriebsstrategie des Fahrzeugs dargestellt wird, wobei bei Auswahl einer Ladesäule auf der Anzeige- und Bedieneinrichtung eine Ladezeit oder Lademenge oder Reichweite abgefragt wird, wobei die Auswerteeinrichtung in Abhängigkeit der eingegebenen Ladezeit oder Lademenge oder Reichweite eine zukünftige Betriebsstrategie ermittelt und auf der Anzeige- und Bedieneinrichtung darstellt. Hinsichtlich weiterer vorteilhafter Ausgestaltungen kann auf die Verfahrensansprüche vollinhaltlich Bezug genommen werden.

Die Erfindung wird nachfolgend anhand eines bevorzugten Ausführungsbeispiels näher erläutert. Die Fig. zeigen:
- Fig. 1: ein schematisches Blockschaltbild einer Vorrichtung zur Ladeplanung eines Fahrzeugs mit elektrischem Antrieb,
- Fig. 2a-c: einen schematischen Ablauf der Darstellungen auf einer Anzeige- und Bedienvorrichtung bei einer ersten Ausführungsform und
- Fig. 3a-d: einen schematischen Ablauf der Darstellung auf einer Anzeige- und Bedieneinrichtung bei einer zweiten Ausführungsform.

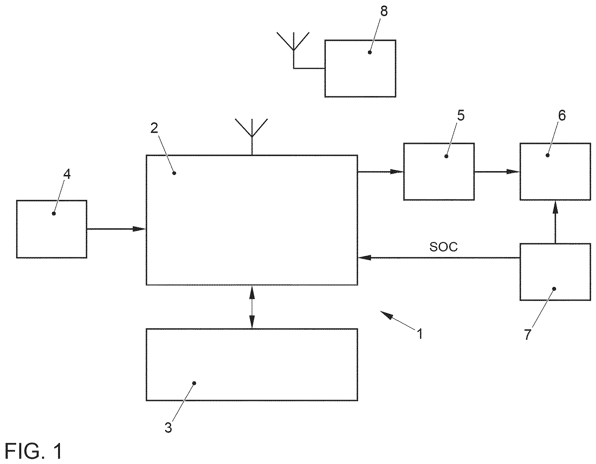

In Fig. 1 ist ein schematisches Blockschaltbild einer Vorrichtung 1 zur Ladeplanung eines Fahrzeugs mit elektrischem Antrieb dargestellt. Die Vorrichtung 1 umfasst eine Auswerteeinrichtung 2 und eine Anzeige- und Bedieneinrichtung 3, die beispielsweise als Touch-Screen ausgebildet ist. Die Auswerteeinrichtung 2 und die Anzeige- und Bedieneinrichtung 3 sind bidirektional miteinander verbunden. Des Weiteren ist die Auswerteeinrichtung 2 mit einer Navigationseinrichtung 4 und einer Steuereinheit 5 einer Elektromaschine 6 verbunden. Des Weiteren erhält die Auswerteeinrichtung 2 einen Ladezustand SOC eines elektrischen Energiespeichers 7 der Elektromaschine 6. Schließlich ist die Auswerteeinrichtung 2 über eine schematisch angedeutete Luftschnittstelle mit einer externen Datenbank 8 verbunden.

Über die Navigationseinrichtung 4 erhält die Auswerteeinrichtung 2 Daten über eine geplante Route. Die Position verschiedener Ladesäulen kann dabei Bestandteil einer digitalen Straßenkarte der Navigationseinrichtung 4 sein oder aber wird der Auswerteeinrichtung 2 über die externe Datenbank 8 übermittelt, die auch aktuelle Wartezeiten an den Ladesäulen und weitere Informationen übermitteln kann.

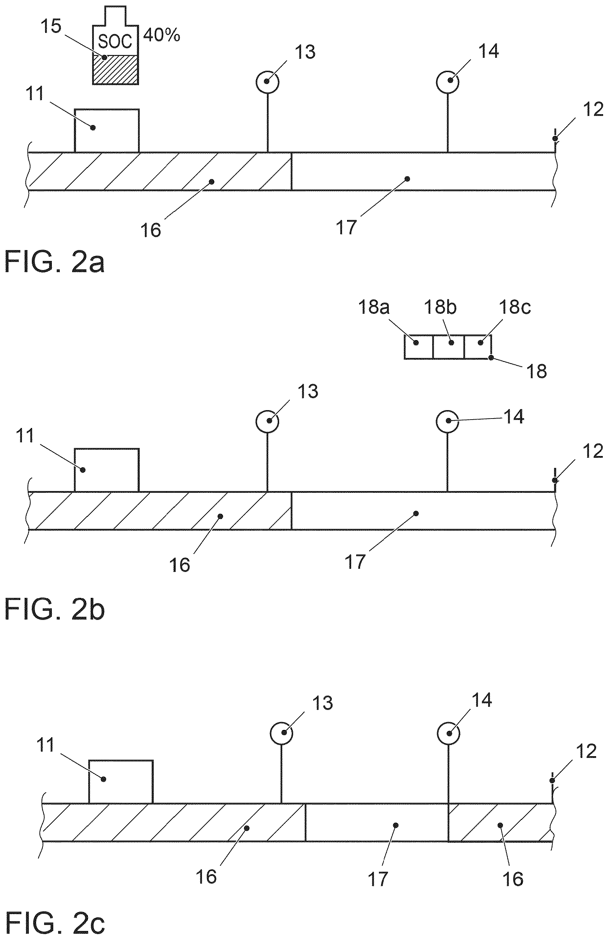

Das Verfahren soll nun anhand der Fig. 2a-c näher erläutert werden. Zunächst erfolgt auf der Anzeige- und Bedieneinrichtung 3 eine erste Darstellung (Fig. 2a), wo eine eigene Fahrzeugposition 11 und ein Fahrtziel 12 der übermittelten Route dargestellt sind. Des Weiteren sind eine erste Ladesäule 13 und eine zweite Ladesäule 14 in Relation zur Fahrzeugposition 11 dargestellt. Weiter ist ein Piktogramm 15 zur Darstellung des Ladezustandes SOC des elektrischen Energiespeichers 7 dargestellt, wobei zusätzlich der Ladezustand auch numerisch dargestellt ist. Alternativ oder zusätzlich kann eine geschätzte elektrische Restreichweite (eRRW) piktogrammförmig und/oder alphanumerisch dargestellt werden. In den späteren Darstellungen ist das Piktogramm 15 aus Übersichtsgründen nicht dargestellt. Schließlich ist die aktuelle Betriebsstrategie dargestellt, wobei ein erster Bereich 16 einen Bereich für reines elektrisches Fahren anzeigt und ein zweiter Bereich 17 einen Bereich anzeigt, wo verbrennungsmotorisch gefahren werden muss. Der erste und zweite Bereich 16, 17 sind dabei optisch gut erkennbar voneinander abgegrenzt, beispielsweise durch unterschiedliche Farben. Dabei sei angemerkt, dass auch mehrere erste und zweite Bereiche 16, 17 existieren können. Wählt nun der Nutzer die zweite Ladesäule 14 aus, so erscheint ein Eingabeelement 18 mit beispielsweise drei Eingabeoptionen 18a-18c für Ladezeiten an der Ladesäule 14 (siehe Fig. 2b). Die Eingabeoptionen sind beispielsweise 1/2 , 1 und 2 Stunden. Wählt dann beispielsweise der Nutzer die Eingabeoption 18b von einer Stunde Ladezeit, so ermittelt die Auswerteeinrichtung 2 eine zukünftige Betriebsstrategie, die dann auf der Anzeige- und Bedieneinrichtung 3 dargestellt wird (siehe Fig. 2c). Als Reaktion auf die eingegebene Ladezeit kann das Fahrzeug von der zweiten Ladesäule 14 bis zum Fahrtziel 12 rein elektrisch fahren. Dabei sei angemerkt, dass die Auswerteeinrichtung 2 in Abhängigkeit vom Ladezustand SOC, Route und/oder Wartezeiten eine Vorauswahl für die darzustellenden Ladesäulen vornehmen kann. Alternativ können die Eingabeoptionen 18a-18c statt der Ladezeiten auch Lademengen (z.B. SOC in %) oder Reichweiten (Lademengen in km) anzeigen.

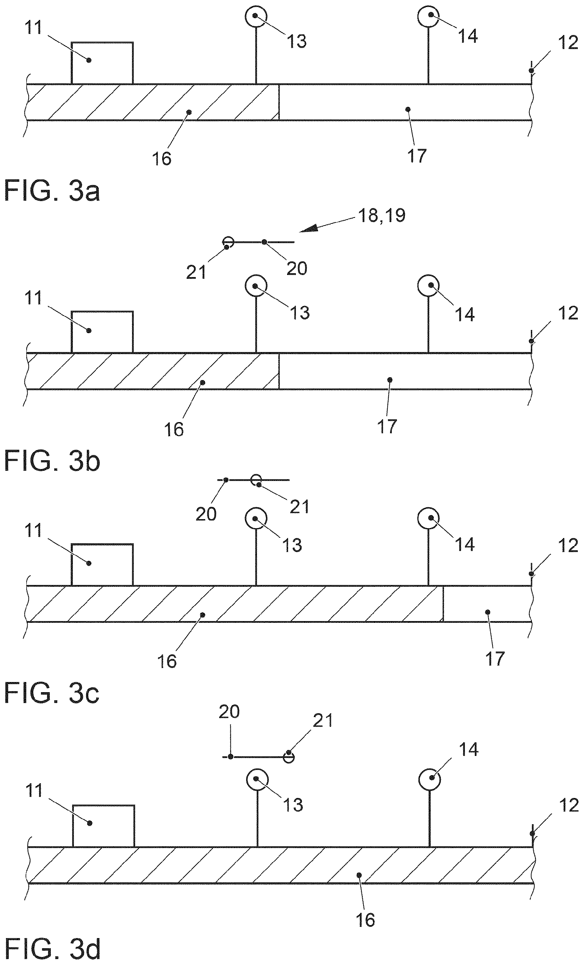

In den Fig. 3a-d ist eine alternative Ausführungsform dargestellt, wobei die Ausgangssituation in Fig. 3a der von Fig. 2a entspricht. Im Unterschied zum Beispiel gemäß den Fig. 2a-c wählt der Nutzer die erste Ladesäule 13 aus, wobei ein Eingabeelement 18 für die Ladezeit dargestellt wird (siehe Fig. 3b). Das Eingabeelement 18 ist als Schieberegler 19 ausgebildet. Der Schieberegler 19 weist einen in einer Kulisse 20 verschiebbaren Regler 21 auf. Durch Berührung oder Gestensteuerung kann dann der Nutzer den Regler 21 verschieben, um die Ladezeit einzugeben. Dabei erhöht sich die Ladezeit, wenn der Regler 21 nach rechts verschoben wird. Beginnt nun der Nutzer, den Regler 21 nach rechts zu verschieben, so wird jeweils eine zukünftige Betriebsstrategie durch die Auswerteeinrichtung 2 ermittelt und dargestellt. In der Fig. 3c wurde der Regler 21 ca. in die Mitte der Kulisse 20 geschoben und entsprechend der Bereich 16 über die zweite Ladesäule 14 hinaus verlängert. Verschiebt dann der Nutzer den Regler 21 weiter nach rechts, so wird schließlich der Bereich 16 bis zum Fahrtziel 12 verlängert. Anstelle der Ladezeit kann auch wieder Lademenge oder die Reichweite mittels des Eingabeelementes 18 eingegeben werden.

Der Nutzer erhält somit eine unmittelbare Rückkopplung, wie sein Verhalten an der Ladesäule Auswirkungen auf die Betriebsstrategie des Fahrzeugs hat.

## Patentansprüche

1. Verfahren zur Ladeplanung eines Fahrzeugs mit elektrischem Antrieb, mittels einer Auswerteeinrichtung (2) und einer Anzeige- und Bedieneinrichtung (3), wobei mittels der Auswerteeinrichtung (2) mindestens eine elektrische Ladesäule (13, 14) im Umkreis des Fahrzeugs ermittelt wird und auf der Anzeige- und Bedieneinrichtung (3) dargestellt wird, wobei auf der Anzeige- und Bedieneinrichtung (3) eine aktuelle Betriebsstrategie des Fahrzeugs bis zu einem Fahrtziel (12) dargestellt wird, wobei die aktuelle Betriebsstrategie eine Unterteilung in elektromotorischen und verbrennungsmotorischen Betrieb bei einem Plug-in Hybridfahrzeug oder einer Darstellung zur Ein- oder Ausschaltung von Verbrauchern zur Erreichung des Ziels bei einem reinen Elektrofahrzeug ist, **dadurch gekennzeichnet, dass** bei Auswahl einer elektrischen Ladesäule (13, 14) auf der Anzeige- und Bedieneinrichtung (3) eine Ladezeit oder Lademenge oder Reichweite als Lademenge in km zum elektrischen Fahren an der ausgewählten Ladesäule (13,14) abgefragt wird, wobei die Auswerteeinrichtung (2) in Abhängigkeit der eingegebenen Ladezeit oder Lademenge oder Reichweite eine zukünftige Betriebsstrategie bis zum Fahrtziel (12) ermittelt und auf der Anzeige- und Bedieneinrichtung (3) darstellt.

2. Verfahren nach Anspruch 1, **dadurch gekennzeichnet, dass** die Auswerteeinrichtung (2) eine Vorauswahl möglicher Ladezeiten oder Lademengen oder Reichweiten durchführt und auf der Anzeige- und Bedieneinrichtung (3) darstellt.

3. Verfahren nach Anspruch 1 oder 2, **dadurch gekennzeichnet, dass** mittels eines Eingabeelements (18) eine kontinuierliche Ladezeit-, oder Lademengen- oder Reichweiten-Eingabe erfolgt.

4. Verfahren nach einem der vorangegangenen Ansprüche, **dadurch gekennzeichnet, dass** die in Abhängigkeit der gewählten Ladesäule (13, 14) und Ladezeit oder Lademenge oder Reichweite ermittelte zukünftige Betriebsstrategie an eine Steuereinheit (5) einer Elektromaschine (6) des Fahrzeugs übermittelt wird.

5. Verfahren nach einem der vorangegangenen Ansprüche, **dadurch gekennzeichnet, dass** die Auswerteeinrichtung (2) eine Vorauswahl der Ladesäulen (13, 14) vornimmt, wobei die Vorauswahl mindestens in Abhängigkeit eines Ladezustandes (SOC) eines elektrischen Energiespeichers (7) der Elektromaschine (6) und/oder einer Wartezeit an der Ladesäule (13, 14) erfolgt.

6. Verfahren nach einem der vorangegangenen Ansprüche, **dadurch gekennzeichnet, dass** mittels einer Navigationseinrichtung (4) das Fahrtziel (12) ermittelt wird, wobei die dargestellte Betriebsstrategie auf der Anzeige- und Bedieneinrichtung (3) in Relation zum Fahrtziel (12) dargestellt wird.

7. Verfahren nach einem der vorangegangenen Ansprüche, **dadurch gekennzeichnet, dass** ein aktueller Ladezustand (SOC) des elektrischen Energiespeichers (7) der Elektromaschine (6) und/oder ein zeitlicher Verlauf eines Ladezustandes (SOC) des elektrischen Energiespeichers (7) der Elektromaschine (6) und/oder eine geschätzte elektrische Restreichweite (eRRW) auf der Anzeige- und Bedieneinrichtung (3) dargestellt wird.

8. Verfahren nach einem der vorangegangenen Ansprüche, **dadurch gekennzeichnet, dass** nach Auswahl einer Ladesäule (13, 14) automatisch oder manuell auf der Anzeige- und Bedieneinrichtung eine Navigationsdarstellung zur Ladesäule (13, 14) dargestellt wird.

9. Vorrichtung zur Ladeplanung eines Fahrzeugs mit elektrischem Antrieb, umfassend eine Auswerteeinrichtung (2) und eine Anzeige- und Bedieneinrichtung (3), wobei die Auswerteeinrichtung (2) derart ausgebildet ist, dass mittels der Auswerteeinrichtung (2) mindestens eine elektrische Ladesäule (13, 14) im Umkreis des Fahrzeugs ermittelt wird und auf der Anzeige- und Bedieneinrichtung (3) dargestellt wird, wobei die Auswerteeinrichtung (2) und die Anzeige- und Bedieneinrichtung (3) derart ausgebildet sind, dass auf der Anzeige- und Bedieneinrichtung (3) eine aktuelle Betriebsstrategie des Fahrzeugs bis zu einem Fahrtziel (12) dargestellt wird, wobei die aktuelle Betriebsstrategie eine Unterteilung in elektromotorischen und verbrennungsmotorischen Betrieb bei einem Plug-in Hybridfahrzeug oder einer Darstellung zur Ein- oder Ausschaltung von Verbrauchern zur Erreichung des Ziels bei einem reinen Elektrofahrzeug ist, **dadurch gekennzeichnet, dass** bei Auswahl einer elektrischen Ladesäule (13, 14) auf der Anzeige- und Bedieneinrichtung (3) eine Ladezeit oder Lademenge oder Reichweite als Lademenge in km zum elektrischen Fahren an der ausgewählten Ladesäule (13,14) abgefragt wird, wobei die Auswerteeinrichtung (2) in Abhängigkeit der eingegebenen Ladezeit oder Lademenge oder Reichweite eine zukünftige Betriebsstrategie bis zum Fahrtziel (12) ermittelt und auf der Anzeige- und Bedieneinrichtung (3) darstellt.

10. Vorrichtung nach Anspruch 9, **dadurch gekennzeichnet, dass** die Auswerteeinrichtung (2) derart ausgebildet ist, dass die in Abhängigkeit der gewählten Ladesäule (13, 14) und Ladezeit oder Lademenge oder Reichweite ermittelte zukünftige Betriebsstrategie an eine Steuereinheit (5) einer Elektromaschine (6) des Fahrzeugs übermittelt wird.

## Claims

1. Method for scheduling the charging of a vehicle with an electric drive by means of an evaluation device (2) and a display and operator control device (3), wherein, by means of the evaluation device (2), at least one electric charging station (13, 14) in the vicinity of the vehicle is identified and displayed on the display and operator control device (3), wherein a current operating strategy of the vehicle as far as a destination (12) is displayed on the display and operator control device (3), wherein the current operating strategy is a division into electric-motor mode and combustion-engine mode in the case of a plug-in hybrid vehicle or a representation of loads being switched on or off in order to reach the destination in the case of a purely electric vehicle, **characterized in that**, when an electric charging station (13, 14) is selected on the display and operator control device (3), a charging time or amount of charge or range as the amount of charge in km for electric driving at the selected charging station (13, 14) is inquired about, wherein, on the basis of the input charging time or amount of charge or range, the evaluation device (2) determines a future operating strategy as far as the destination (12) and displays it on the display and operator control device (3).

2. Method according to Claim 1, **characterized in that** the evaluation device (2) carries out a preselection of possible charging times or amounts of charge or ranges and displays them on the display and operator control device (3).

3. Method according to Claim 1 or 2, **characterized in that** a continuous input of charging time or amount of charge or range is carried out by means of an input element (18).

4. Method according to one of the preceding claims, **characterized in that** the future operating strategy determined on the basis of the selected charging station (13, 14) and charging time or amount of charge or range is transmitted to a control unit (5) of an electric machine (6) of the vehicle.

5. Method according to one of the preceding claims, **characterized in that** the evaluation device (2) performs a preselection of the charging stations (13, 14), wherein the preselection is carried out at least on the basis of a state of charge (SOC) of an electrical energy store (7) of the electric machine (6) and/or a waiting time at the charging station (13, 14) .

6. Method according to one of the preceding claims, **characterized in that** the destination (12) is determined by means of a navigation device (4), wherein the displayed operating strategy is displayed in relation to the destination (12) on the display and operator control device (3).

7. Method according to one of the preceding claims, **characterized in that** a current state of charge (SOC) of the electrical energy store (7) of the electric machine (6) and/or a temporal progression of a state of charge (SOC) of the electrical energy store (7) of the electric machine (6) and/or an estimated remaining electric range (RER) is displayed on the display and operator control device (3).

8. Method according to one of the preceding claims, **characterized in that**, after a charging station (13, 14) has been selected, a representation of navigation to the charging station (13, 14) is automatically or manually displayed on the display and operator control device.

9. Device for scheduling the charging of a vehicle with an electric drive, comprising an evaluation device (2) and a display and operator control device (3), wherein the evaluation device (2) is designed such that, by means of the evaluation device (2), at least one electric charging station (13, 14) in the vicinity of the vehicle is identified and displayed on the display and operator control device (3), wherein the evaluation device (2) and the display and operator control device (3) are designed such that a current operating strategy of the vehicle as far as a destination (12) is displayed on the display and operator control device (3), wherein the current operating strategy is a division into electric-motor mode and combustion-engine mode in the case of a plug-in hybrid vehicle or a representation of loads being switched on or off in order to reach the destination in the case of a purely electric vehicle, **characterized in that**, when an electric charging station (13, 14) is selected on the display and operator control device (3), a charging time or amount of charge or range as the amount of charge in km for electric driving at the selected charging station (13, 14) is inquired about, wherein, on the basis of the input charging time or amount of charge or range, the evaluation device (2) determines a future operating strategy as far as the destination (12) and displays it on the display and operator control device (3).

10. Device according to Claim 9, **characterized in that** the evaluation device (2) is designed such that the future operating strategy determined on the basis of the selected charging station (13, 14) and charging time or amount of charge or range is transmitted to a control unit (5) of an electric machine (6) of the vehicle.

## Revendications

1. Procédé de planification de recharge d'un véhicule à entraînement électrique, au moyen d'un dispositif d'évaluation (2) et d'un dispositif d'affichage et d'actionnement (3), le dispositif d'évaluation (2) déterminant au moins une borne de recharge électrique (13, 14) dans le périmètre du véhicule et la représente sur le dispositif d'affichage et d'actionnement (3), une stratégie de fonctionnement actuelle du véhicule jusqu'à une destination (12) étant représentée sur le dispositif d'affichage et d'actionnement (3), la stratégie de fonctionnement actuelle étant pour un véhicule hybride rechargeable une division en fonctionnement par moteur électrique et en fonctionnement par moteur à combustion interne ou étant une représentation pour la mise en ou hors circuit de consommateurs pour atteindre la destination dans le cas d'un véhicule purement électrique,
**caractérisé en ce que** lors de la sélection d'une borne de recharge électrique (13, 14) sur le dispositif d'affichage et d'actionnement (3), un temps de recharge ou un niveau de recharge ou une autonomie en tant que niveau de recharge en km pour la conduite électrique est demandé(e) à la colonne de charge (13, 14) sélectionnée, le dispositif d'évaluation (2) déterminant en fonction du temps de recharge ou du niveau de recharge ou de l'autonomie entré(e) une stratégie de fonctionnement future jusqu'à la destination (12) et la représentant sur le dispositif d'affichage et d'actionnement (3).

2. Procédé selon la revendication 1, **caractérisé en ce que** le dispositif d'évaluation (2) effectue une présélection de temps de recharge ou de niveaux de recharge ou d'autonomies possibles et les représente sur le dispositif d'affichage et d'actionnement (3).

3. Procédé selon la revendication 1 ou 2, **caractérisé en ce qu'**une entrée continue de temps de recharge ou de niveaux de recharge ou d'autonomie est effectuée au moyen d'un élément d'entrée (18).

4. Procédé selon l'une quelconque des revendications précédentes, **caractérisé en ce que** la stratégie de fonctionnement future, déterminée en fonction de la borne de recharge (13, 14) sélectionnée et du temps de recharge ou du niveau de recharge ou de l'autonomie, est transmise à une unité de commande (5) d'une machine électrique (6) du véhicule.

5. Procédé selon l'une quelconque des revendications précédentes, **caractérisé en ce que** le dispositif d'évaluation (2) effectue une présélection des bornes de recharge (13, 14), la présélection étant effectuée au moins en fonction d'un état de charge (SOC) d'un accumulateur d'énergie électrique (7) de la machine électrique (6) et/ou d'un temps d'attente à la borne de recharge (13, 14).

6. Procédé selon l'une quelconque des revendications précédentes, **caractérisé en ce qu'**un dispositif de navigation (4) permet de déterminer la destination (12), la stratégie de fonctionnement représentée étant représentée sur le dispositif d'affichage et d'actionnement (3) par rapport à la destination (12).

7. Procédé selon l'une quelconque des revendications précédentes, **caractérisé en ce qu'**un état de charge actuel (SOC) de l'accumulateur d'énergie électrique (7) de la machine électrique (6) et/ou un déroulement dans le temps d'un état de charge (SOC) de l'accumulateur d'énergie électrique (7) de la machine électrique (6) et/ou une autonomie résiduelle estimée (eRRW) sont représentés sur le dispositif d'affichage et d'actionnement (3).

8. Procédé selon l'une quelconque des revendications précédentes, **caractérisé en ce qu'**après la sélection d'une borne de recharge (13, 14), une représentation de navigation jusqu'à la borne de recharge (13, 14) est représentée automatiquement ou manuellement sur le dispositif d'affichage et d'actionnement.

9. Dispositif de planification de recharge d'un véhicule à entraînement électrique, comprenant un dispositif d'évaluation (2) et un dispositif d'affichage et d'actionnement (3), le dispositif d'évaluation (2) étant réalisé de telle sorte que le dispositif d'évaluation (2) détermine au moins une borne de recharge électrique (13, 14) dans le périmètre du véhicule et la représente sur le dispositif d'affichage et d'actionnement (3), le dispositif d'évaluation (2) et le dispositif d'affichage et d'actionnement (3) étant réalisés de telle sorte qu'une stratégie de fonctionnement actuelle du véhicule jusqu'à une destination (12) est représentée sur le dispositif d'affichage et d'actionnement (3), la stratégie de fonctionnement actuelle étant pour un véhicule hybride rechargeable une division en fonctionnement par moteur électrique et en fonctionnement par moteur à combustion interne ou étant une représentation pour la mise en ou hors circuit de consommateurs pour atteindre la destination dans le cas d'un véhicule purement électrique,
**caractérisé en ce que** lors de la sélection d'une borne de recharge électrique (13, 14), sur le dispositif d'affichage et d'actionnement (3), un temps de recharge ou un niveau de recharge ou une autonomie en tant que niveau de recharge en km pour la conduite électrique est demandé(e) à la colonne de charge (13, 14) sélectionnée, le dispositif d'évaluation (2) déterminant en fonction du temps de recharge ou du niveau de recharge ou de l'autonomie entré(e) une stratégie de fonctionnement future jusqu'à la destination (12) et la représentant sur le dispositif d'affichage et d'actionnement (3).

10. Dispositif selon la revendication 9, **caractérisé en ce que** le dispositif d'évaluation (2) est réalisé de telle sorte que la stratégie de fonctionnement future déterminée en fonction de la borne de recharge sélectionnée (13, 14) et du temps de recharge ou du niveau de recharge ou de l'autonomie est transmise à une unité de commande (5) d'une machine électrique (6) du véhicule.
